# EUROPEAN PATENT APPLICATION

(11) **EP 4 775 968 A1**
(43) Date of publication of application: **15.07.2026**
(21) Application number: 25221343.4
(22) Date of filing: 08.12.2025
(51) Int. Cl.: G01N 23/046

(54) **SCANNING APPARATUS AND METHOD FOR SCANNING A PLURALITY OF COMPONENTS**

(30) Priority: 08.01.2025 GB 202500184
(71) Applicant: Rolls-Royce plc, London N1 9FX (GB)
(72) Inventor: Mulloth, Akhil, Derby, DE24 8BJ (GB)
(74) Representative: Rolls-Royce plc

(57) **Abstract**

A method (200) for scanning a plurality of components (102). The method (200) includes providing an imaging beam source (108), an imaging beam receiver (114), and a support platform (104). The support platform (104) is configured to rotate and/or revolve relative to the imaging beam source (108) and the imaging beam receiver **(114)** about one or more axes. The method (200) further includes disposing the plurality of components (102) on the support platform (104). The plurality of components (102) is positioned in a gap (118) between a first geometrical figure (120) and at least one second geometrical figure (122) in a configuration that reduces the variation in material thickness penetrated at different relative angles of rotation and/or revolution. The first geometrical figure (120) and the at least one second geometrical figure (122) are concentric.

## Description

### CROSS REFERENCE TO RELATED APPLICATIONS

This represents the first application directed towards the subject-matter.

### FIELD

This disclosure relates to a scanning apparatus, and in particular, to a method for scanning a plurality of components.

### BACKGROUND

X-ray scans such as computed tomography (CT) scans are conventionally used in industry for detecting defects such as voids, cracks, and inclusions, based on differences in X-ray absorption in these regions. CT techniques can also be used for investigative work on subjects such as aerofoil blades, and in particular, turbine blades of gas turbine engines. In particular, CT may be used to produce three-dimensional (3D) representations of a component. Generally, during a CT scan, x-ray beams that are generated by an x-ray source penetrate the subject to be scanned. The x-ray beam, after being attenuated by different densities of material within the subject, impinges upon an array of radiation detectors. The array of radiation detectors produces electrical signals indicative of the attenuated x-ray beam, thereby generating an x-ray image.

To produce a 3D model, 2D images of the component are taken from multiple angles and the images are computationally combined. 3D CT is an emerging technology for the inspection of dense metal parts such as those produced by additive manufacturing that can have non-line of sight surfaces and cannot be inspected by other methods. A 3DCT scan typically involves rotating the component about an axis, either through a full 360-degree rotation or a partial rotation. The axis of rotation can lie in a flat plane, be inclined, or follow a more complex 3D trajectory. During scanning, part of the x-rays is attenuated by a material of the component, some are scattered, and the remaining are transmitted through the component to fall on the detector.

The component may be oriented in a manner that a material path length that the x-ray penetrates is reduced or minimized. It is already known in prior art that bigger and thicker objects generally produce lower quality scans as they create more beam scattering, beam hardening and other non-linear artefacts. In order to reduce beam hardening and poor penetration, it is suggested to increase a voltage of the x-ray and to use a physical or software-based scatter correction. Increasing the voltage produces a higher number of x-rays capable of penetrating more material. The area which is scanned at the higher voltage will produce a higher quality image. However, the voltage should be limited as too high voltage will reduce the difference in contrast between two materials as the material will attenuate fewer x-rays. Therefore, it is desirable to improve the quality and/or efficiency of CT scanning of objects.

Specifically, components with complex cross sections and/or cross sections that change along their length such as turbine blades and vanes face particular scanning challenges. During scanning of the components having varying material thickness, a signal intensity of transmitted x-ray may vary significantly between thick and thin sections of the component. This variation in the signal intensity of the x-ray may result in reduced contrast and image quality. Similarly, during scanning of multiple objects, the signal intensity of the x-ray may become significantly lower than the scatter, thereby causing error in the scanned image. Due to above mentioned challenges, multiple hard and dense components are scanned individually to ensure image clarity, which increases scan time.

### SUMMARY

According to a first aspect, a method for scanning a plurality of components is provided. The method includes providing an imaging beam source, an imaging beam receiver, and a support platform. The imaging beam source and the imaging beam receiver are oppositely disposed to either side of the support platform. The support platform is configured to rotate and/or revolve relative to the imaging beam source and the imaging beam receiver about one or more axes. The method further includes disposing the plurality of components on the support platform. The plurality of components is positioned in a gap between a first geometrical figure and at least one second geometrical figure in a configuration that reduces the variation in material thickness penetrated at different relative angles of rotation and/or revolution. The first geometrical figure and the at least one second geometrical figure are concentric. The method further includes generating, by the imaging beam source, an imaging beam that passes through the plurality of components while the support platform rotates and/or revolves relative to the imaging beam source and the imaging beam receiver about the one or more axes. The method further includes collecting projections each taken at the imaging beam receiver at different relative angles of rotation and/or revolution. The method further includes generating, by the imaging beam receiver, a three-dimensional image of the plurality of components based on the collected projections. Alternatively, in some embodiments, the method includes generating the three-dimensional image of the plurality of components through a software or a computer that may be separate from a scanning apparatus.

Positioning of the plurality of components in such configuration in the gap defined between the first geometrical figure and the at least one second geometrical figure may reduce variation in material thickness penetrated at the different relative angles of rotation and/or revolution of the support platform. This may enable the method of the present disclosure to generate an image with more uniform contrast and improved resolution across a cross-section of the plurality of components. Moreover, the disclosed positioning of the plurality of components as per the method of the present disclosure may simplify adjustment of scanning parameters by reducing the variation in material thickness being penetrated, which was otherwise difficult to achieve by conventional scanning methods due to variable thickness penetrated at different angles of rotation and/or revolution. Additionally, such strategic positioning of the plurality of components on the support platform may enable the method of the present disclosure to reduce beam hardening and other non-linear artefacts, thereby creating more even distribution of the signal intensity of the imaging beam. Moreover, this may allow simultaneous scanning of multiple hard and dense objects, thereby significantly reducing the scanning time.

In some embodiments, the plurality of components is positioned in the gap such that smallest dimension of one or more regions of interest of each of the plurality of components is aligned with a corresponding radial line joining the corresponding component in the plurality of components and centre of rotation and/or revolution. By aligning the smallest dimension of the one or more regions of interest of each of the plurality of components with the corresponding radial line, the method of the present disclosure may ensure significant reduction in the material path length of the imaging beam (i.e., x-ray), thereby producing more uniform contrast across the cross-section of the corresponding component or the plurality of components.

In some embodiments, the plurality of components is positioned in the gap such that combined thickness of material of two or more adjacent components to be penetrated by the imaging beam is evened out in a direction between the imaging beam source and the imaging beam receiver. In other words, positioning of the plurality of components in such configuration may average out the combined thickness of the material of two or more adjacent components. Averaging out the combined material thickness of the two or more adjacent components may reduce artefacts caused by beam hardening, concave wall effect, and other non-linear artefacts. In this way, in addition to placing the components opposite to each other, the combined thickness of material of given components may also be evened out by placing the components adjacent to each other. Further, the plurality of components may be positioned at specific angles relative to one another in order to even out the combined thickness of material of two or more components.

In some embodiments, the plurality of components is positioned in the gap such that combined thickness of material of two or more oppositely positioned components to be penetrated by the imaging beam is evened out in a direction between the imaging beam source and the imaging beam receiver. In other words, positioning of the plurality of components in such configuration may average out the combined thickness of the material of two or more oppositely positioned components. Averaging out the combined material thickness of the two or more oppositely positioned components may reduce artefacts caused by beam hardening and other non-linear artefacts.

In some embodiments, the at least one second geometrical figure includes a plurality of second geometrical figures that are concentric with one another. The plurality of concentric second geometrical figures may ensure symmetrical positioning of the plurality of components on the support platform, thereby ensuring a constant material thickness for each projection. This may ensure uniform contrast and improved image quality of the scan.

For example, the gap between the first geometrical figure and the second geometrical figure may include the components in a first orientation, and the gap between the two second geometrical figures may include the components in a second orientation (opposite to the first orientation). For example, the components may be turbine blades disposed, such that, in the first orientation, the root is pointing upwards and the tip/shroud is pointing downwards, and in the second orientation, the root is pointing downwards and the tip/shroud is pointing upwards. In another example, the components disposed in corresponding gaps between different geometrical figures may be different from one another. In another example, the gap between the first geometrical figure and the at least one second geometrical figure may include the components arranged in two different orientations in an alternative manner.

In some embodiments, any two adjacent second geometrical figures in the plurality of second geometrical figures defines a corresponding gap therebetween.

In some embodiments, at least one component in the plurality of components is positioned in the gap between the corresponding two adjacent second geometrical figures. The at least one component is positioned in the gap between the corresponding two adjacent second geometrical figures in such a way that smallest dimension of one or more regions of interest of the at least one component is aligned with a corresponding radial line joining the corresponding at least one component and centre of rotation and/or revolution. Such placement of the at least one component in the gap between the corresponding two adjacent second geometrical figures may ensure reduction in variation in material thickness being penetrated and hence uniform distribution of the signal intensity of the imaging beam.

In some embodiments, the plurality of second geometrical figures has similar shapes. For example, some of the components may be positioned in a first circle and some of the components may be positioned in second circle that is concentric with the first circle. In other embodiments, similar shapes of the plurality of second geometrical figures 122 may include a square, a triangle, a rectangle, or a polygon. Similar shapes of the plurality of second geometrical figures may be chosen based on application requirements.

In some embodiments, the plurality of second geometrical figures has different shapes. For example, some of the components may be positioned in a circle and some of the components may be positioned in a square or rectangle that is concentric with the circle. Different shapes of the plurality of second geometrical figures may be chosen based on application requirements.

In some embodiments, the first geometrical figure and the at least one second geometrical figure have similar shapes. For example, the first geometrical figure can be a circle, a triangle, a rectangle, or a polygon, and the at least one second geometrical figure may also have the same shape as the first geometrical figure. Similar shapes of the first geometrical figure and the at least one second geometrical figure may simplify the arrangement of the plurality of components on the support platform. Similar shapes of the first geometrical figure and the at least one second geometrical figure may be chosen based on application requirements.

In some embodiments, the first geometrical figure and the at least one second geometrical figure have different shapes. For example, the first geometrical figure can be a circle, a triangle, a rectangle and the at least one second geometrical figure can be a shape other than the first geometrical figure. Different shapes of the first geometrical figure and the at least one second geometrical figure may be chosen based on application requirements.

In some embodiments, the first geometrical figure and/or the at least one second geometrical figure are two-dimensional figures such as a circle, a triangle, an ellipse, a rectangle, a square, or a polygon.

In some embodiments, the first geometrical figure and/or the at least one second geometrical figure are three-dimensional figures such as an ellipsoid, a sphere, a cube, a cuboid, a prism, a cylinder. Three-dimensional geometrical figures may ensure proper utilization of available space to accommodate the plurality of components on the support platform.

In some embodiments, the plurality of components is positioned offset from the one or more axes of rotation and/or revolution. This means that centres of the plurality of components are displaced from the one or more axes of rotation and/or revolution of the support platform. This may improve image quality and contrast of the scan. This may also reduce the concave wall effect and other non-linear artefacts.

In some embodiments, the plurality of components is positioned between the first geometrical figure and the at least one second geometrical figure, such that a notional line drawn from the imaging beam source to the imaging beam receiver passing through the one or more axes of rotation and/or revolution intersects two or more of the plurality of components. Such positioning of the plurality of components in which the notional line drawn from the imaging beam source to the imaging beam receiver intersects two or more of the plurality of components, may reduce a variation in material thickness to be penetrated and scanned, and can make scanning parameter setting easier. Optimising the scanning parameters may further improve the scanning efficiency.

In some embodiments, the plurality of components is positioned between the first geometrical figure and the at least one second geometrical figure, such that the first geometrical figure and the at least one second geometrical figure together provide rotational symmetry of an overall configuration about the one or more axes of rotation and/or revolution.

The plurality of components may be oriented to provide rotational symmetry to all the components about the axis of rotation. The plurality of components may be of substantially similar design and shape and disposed on the support platform on vertices of the corresponding geometric figure. The rotational symmetry of an overall arrangement of the plurality of components may improve scanning efficiency of the scanning process.

In some embodiments, a centre of symmetry of the first geometrical figure and the at least one second geometrical figure is aligned with the one or more axes of rotation and/or revolution.

According to a second aspect, a scanning apparatus for scanning a plurality of components is provided. The scanning apparatus includes an imaging beam source configured to generate an imaging beam that passes through the plurality of components. The scanning apparatus further includes an imaging beam receiver configured to receive the imaging beam, such that the plurality of components is disposed between the imaging beam source and the imaging beam receiver. The imaging beam receiver is configured to generate a three-dimensional image in response to receiving the imaging beam. The scanning apparatus further includes a support platform configured to support the plurality of components. The support platform is configured to rotate and/or revolve relative to the imaging beam source and the imaging beam receiver about one or more axes to allow generation of the three-dimensional image. The plurality of components is positioned in a gap between a first geometrical figure and at least one second geometrical figure in a configuration that reduces the variation in material thickness penetrated at different relative angles of rotation and/or revolution. The first geometrical figure and the at least one second geometrical figure are concentric.

Positioning of the plurality of components in such configuration in the gap defined between the first geometrical figure and the second geometrical figure may reduce variation in material thickness penetrated at the different relative angle of rotation and/or revolution of the support platform. This may enable the scanning apparatus of the present disclosure to generate an image with more uniform contrast and improved resolution across a cross-section of the plurality of components. Moreover, the disclosed positioning of the plurality of components as per the scanning apparatus of the present disclosure may simplify adjustment of scanning parameters by reducing the variation in material thickness being penetrated. Additionally, such strategic positioning of the plurality of components on the support platform may reduce scatter radiation, thereby creating more even distribution of the signal intensity of the imaging beam. This may allow simultaneous scanning of multiple hard and dense objects, thereby significantly reducing the scanning time.

### BRIEF DESCRIPTION OF THE DRAWINGS

Embodiments will now be described by way of example only with reference to the accompanying drawings, in which:
**FIG. 1** shows a schematic sectional side view of a gas turbine engine;
**FIG. 2** is a schematic view of a scanning apparatus for scanning a plurality of components, according to an embodiment of the present disclosure;
**FIG. 3** is a schematic view of an exemplary arrangement of the plurality of components on a support platform of the scanning apparatus of **FIG. 2****,** according to an embodiment of the present disclosure;
**FIG. 4** is a schematic view of an exemplary arrangement of the plurality of component on a support platform of the scanning apparatus of **FIG. 2****,** according to another embodiment of the present disclosure; and
**FIG. 5** is a flowchart of a method for scanning a plurality of components, according to an embodiment of the present disclosure.

### DETAILED DESCRIPTION

Aspects and embodiments of the present disclosure will now be discussed with reference to the accompanying Figures. Further aspects and embodiments will be apparent to those skilled in the art.

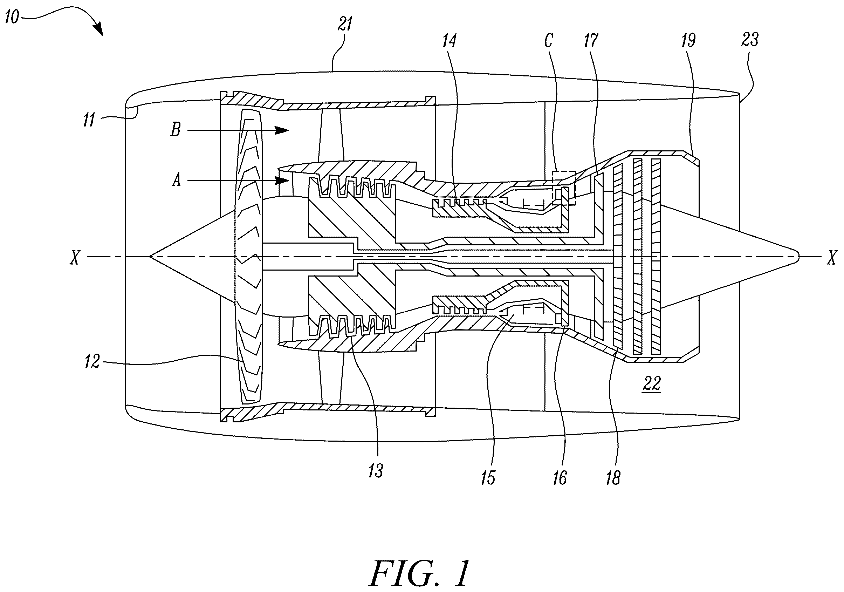

**FIG. 1** shows a schematic sectional side view of a gas turbine engine 10 having a principal rotational axis X-X'. The gas turbine engine 10 includes, in axial flow series, an air intake 11, a compressive fan 12 (which may also be referred to as a low-pressure compressor), an intermediate pressure compressor 13, a high-pressure compressor 14, a combustion equipment 15, a high-pressure turbine 16, an intermediate pressure turbine 17, a low-pressure turbine 18, and a core exhaust nozzle 19. A nacelle 21 generally surrounds the gas turbine engine 10 and defines the air intake 11, a bypass duct 22, and a bypass exhaust nozzle 23.

The gas turbine engine 10 works in a conventional manner so that the air entering the air intake 11 is accelerated by the compressive fan 12 to produce two air flows: a first air flow A into the intermediate pressure compressor 13 and a second air flow B which passes through the bypass duct 22 to provide a propulsive thrust. The intermediate pressure compressor 13 compresses the first air flow A directed into it before delivering that air to the high-pressure compressor 14 where further compression takes place.

The compressed air exhausted from the high-pressure compressor 14 is directed into the combustion equipment 15 where it is mixed with fuel and the mixture combusted. The resulting hot combustion products then expand through, and thereby drive the high, intermediate, and low-pressure turbines 16, 17, 18 before being exhausted through the core exhaust nozzle 19 to provide additional propulsive thrust. The high, intermediate, and low-pressure turbines respectively drive the high and intermediate pressure compressors, 14, 13, and the compressive fan 12 by suitable interconnecting shafts.

In some embodiments, the gas turbine engine 10 is used in an aircraft. In some embodiments, the gas turbine engine 10 is an ultra-high bypass ratio engine (UHBPR). In addition, the present invention is equally applicable to aero gas turbine engines, marine gas turbine engines and land-based gas turbine engines.

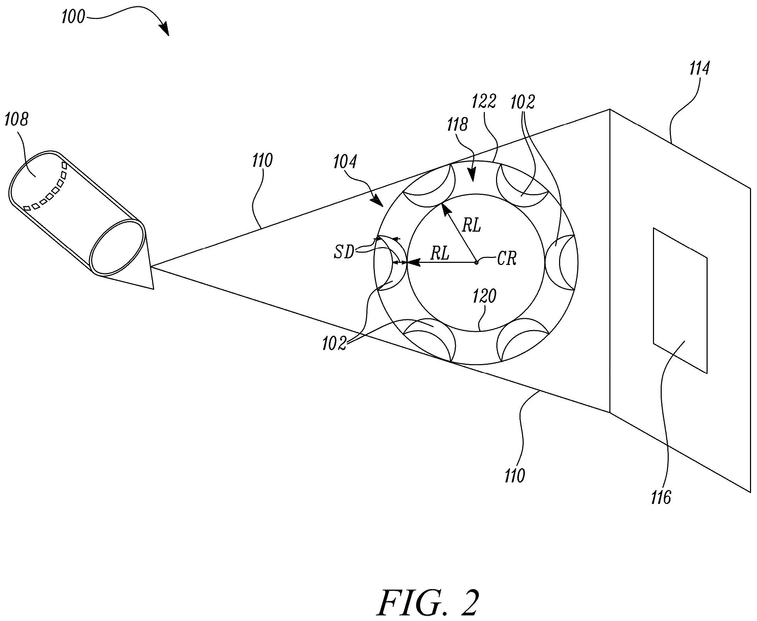

**FIG. 2** is a schematic view of a scanning apparatus 100 for scanning a plurality of components 102, according to an embodiment of the present disclosure. The scanning apparatus 100 performs a computational tomography (CT), preferably a three-dimensional CT, of the plurality of components 102. In some embodiments, the plurality of components 102 includes components of the gas turbine engine 10 (shown in **FIG. 1****).** In some embodiments, the plurality of components 102 includes turbine blades or compressor blades of the gas turbine engine 10. In other embodiments, the plurality of components 102 include components of another prime mover or a machine. In some embodiments, the plurality of components 102 is metallic. The plurality of components 102 is shown schematically in **FIG. 2** for the purpose of illustration. In the illustrated embodiment of **FIG. 2****,** a cross section of the plurality of components 102 is shown as crescent shaped (i.e., half-moon). However, other shapes and designs for the plurality of components 102 are foreseeable and could be used.

The scanning apparatus 100 includes an imaging beam source 108 configured to generate an imaging beam 110 that passes through the plurality of components 102. In some embodiments, the imaging beam source 108 is an electromagnetic source, such as an x-ray source or a gamma-ray source. The imaging beam source 108 is capable of emitting the imaging beam 110 in the electromagnetic spectrum that can penetrate or be transmitted through a material after attenuation.

The scanning apparatus 100 further includes an imaging beam receiver 114 configured to receive the imaging beam 110, such that the plurality of components 102 is disposed between the imaging beam source 108 and the imaging beam receiver 114. The imaging beam receiver 114 is configured to generate a three-dimensional image 116 in response to receiving the imaging beam 110. The scanning apparatus 100 further includes a support platform 104 configured to support the plurality of components 102.

In some embodiments, the plurality of components 102 is positioned offset from the one or more axes of rotation and/or revolution. This means that centres of the plurality of components 102 is displaced from the one or more axes of rotation and/or revolution. This may improve image quality and contrast of the scan. This may also reduce the concave wall effect. The imaging beam source 108 and the imaging beam receiver 114 are oppositely disposed to either side of the support platform 104. The support platform 104 is configured to rotate and/or revolve relative to the imaging beam source 108 and the imaging beam receiver 114 about one or more axes to allow generation of the three-dimensional image 116.

As shown in **FIG. 2****,** the plurality of components 102 is positioned in a gap 118 between a first geometrical figure 120 and at least one second geometrical figure 122 in a configuration that reduces the variation in material thickness penetrated at different relative angles of rotation and/or revolution. The first geometrical figure 120 and the at least one second geometrical figure 122 are concentric. The plurality of components 102 is positioned in the gap 118 such that smallest dimension SD of one or more regions of interest 103 of each of the plurality of components 102 is aligned with a corresponding radial line RL joining the corresponding component 102 in the plurality of components 102 and centre of rotation and/or revolution CR.

Dimensions of an object are usually its length, width, and thickness. Out of these dimensions, in the illustrated embodiment of **FIG. 2****,** the smallest dimension SD of the one or more regions of interest 103 of each of the plurality of components 102 is the thickness thereof. The thickness of each of the plurality of components 102 is along the radial line RL joining the corresponding component 102 in the plurality of components 102 and centre of rotation and/or revolution CR. Further, the length and the width of each of the plurality of components 102 would be perpendicular to the corresponding radial line RL.

Further, in the illustrated embodiment of **FIG. 2****,** the smallest dimension SD (i.e., the thickness) of the one or more regions of interest 103 of each of the plurality of components 102 is varying along corresponding length or width thereof. In other embodiments, the smallest distance SD of the one or more regions of interest 103 of each of the plurality of components 102 may remain constant along corresponding length or width thereof. However, it is always desirable that the smallest distance SD should be aligned with the corresponding radial line RL to ensure significant reduction in the material path length of the imaging beam 110 (i.e., x-ray), thereby producing more uniform contrast across the cross-section of the corresponding component 102 or the plurality of components 102.

In some embodiments, the plurality of components 102 is positioned in the gap 118 such that combined thickness of material of two or more adjacent components to be penetrated by the imaging beam 110 is evened out in a direction between the imaging beam source 108 and the imaging beam receiver 114. In other words, positioning of the plurality of components 102 in such configuration may average out the combined material thickness of the two or more adjacent components 102 to be penetrated. Averaging out the combined material thickness of the two or more adjacent components 102 may reduce artefacts caused by beam hardening and other non-linear artefacts.

In some embodiments, the plurality of components 102 is positioned in the gap 118 such that combined thickness of material of two or more oppositely positioned components 102 to be penetrated by the imaging beam 110 is evened out in a direction between the imaging beam source 108 and the imaging beam receiver 114. In other words, positioning of the plurality of components 102 in such configuration may average out the combined material thickness of the two or more oppositely positioned components 102. Averaging out the combined material thickness of the two or more oppositely positioned components 102 may reduce artefacts caused by beam hardening and other non-linear artefacts.

In some embodiments, the plurality of components 102 is positioned between the first geometrical figure 120 and the at least one second geometrical figure 122, such that the first geometrical figure 120 and the at least one second geometrical figure 122 together provide rotational symmetry of an overall configuration about the one or more axes of rotation and/or revolution. The plurality of components 102 may be oriented to provide rotational symmetry to all the components 102 about the axis of rotation. The plurality of components 102 may be of substantially similar designs and shapes and disposed on the support platform 104 on vertices of the corresponding geometric figure. The rotational symmetry of an overall arrangement of the plurality of components 102 may improve scanning efficiency of the scanning process.

In some embodiments, a centre of symmetry of the first geometrical figure 120 and the at least one second geometrical figure 122 is aligned with the one or more axes of rotation and/or revolution. In some embodiments, the plurality of components 102 is positioned between the first geometrical figure 120 and the at least one second geometrical figure 122, such that a notional line drawn from the imaging beam source 108 to the imaging beam receiver 114 passing through the one or more axes of rotation and/or revolution intersects two or more of the plurality of components 102. Such positioning of the plurality of components 102 in which the notional line drawn from the imaging beam source 108 to the imaging beam receiver 114 intersects two or more of the plurality of components 102, may reduce a variation in material thickness to be penetrated and scanned, and can make scanning parameter setting easier. Optimising the scanning parameters may further improve the scanning efficiency. In other embodiments, the centre of symmetry of the first geometrical figure 120 and the at least one second geometrical figure 122 may not be aligned with the one or more axes of rotation and/or revolution.

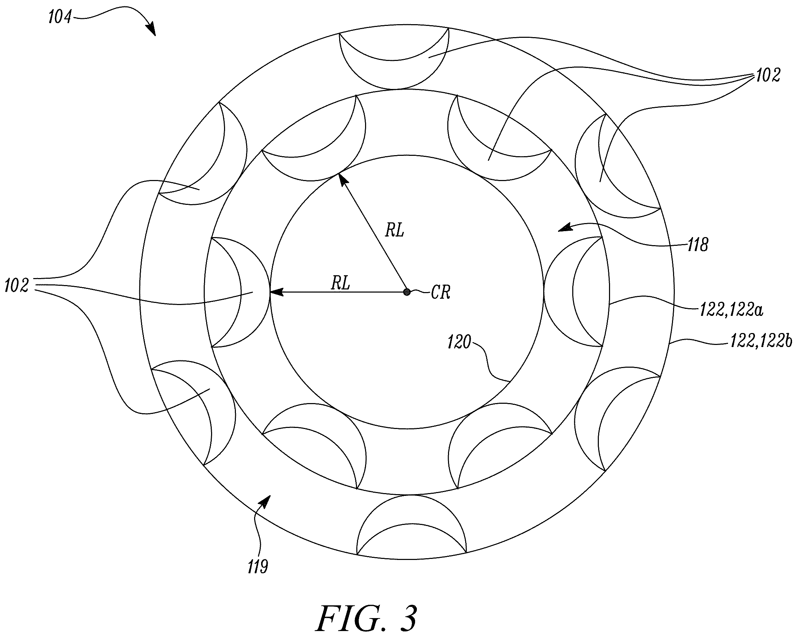

**FIG. 3** is a schematic view of an exemplary arrangement of the plurality of component 102 on the support platform 104 of the scanning apparatus 100, according to an embodiment of the present disclosure. In some embodiments, the at least one second geometrical figure 122 includes a plurality of second geometrical figures 122 that are concentric with one another. In the illustrated embodiment of **FIG. 3****,** the plurality of second geometrical figures 122 includes two circular geometrical figures 122a, 122b that are concentric with each other. The two circular geometrical figures 122a, 122b in the plurality of second geometrical figures 122 are also concentric with the first geometric figure 120.

Further, any two adjacent second geometrical figures 122 (i.e., the two circular geometrical figures 122a, 122b) in the plurality of second geometrical figures 122 defines a corresponding gap 119 therebetween. At least one component 102 in the plurality of components 102 is positioned in the gap 119 between the corresponding two adjacent second geometrical figures 122 (i.e., the two circular geometrical figures 122a, 122b).

In some embodiments, the plurality of second geometrical figures 122 has similar shapes. In the illustrated embodiment of **FIG. 3****,** the plurality of second geometrical figures 122 is of circular shape. Some of the components 102 may be positioned in the geometrical figure 122a and some of the components 102 may be positioned in the geometrical figure 122b that is concentric with the geometrical figure 122a. In other embodiments, the similar shapes of the plurality of second geometrical figures 122 may include a square, a triangle, a rectangle, or a polygon. Similar shapes of the plurality of second geometrical figures 122 may be chosen based on application requirements.

In some embodiments, the first geometrical figure 120 and the at least one second geometrical figure 122 have similar shapes. For example, the first geometrical figure 120 can be a circle, a triangle, a rectangle, or a polygon, and the at least one second geometrical figure 122 may also have the same shape as the first geometrical figure 120. In the illustrated embodiment of **FIG. 3****,** both the first geometrical figure 120 and the at least one second geometrical figure 122 have similar shapes (i.e., circle). Similar shapes of the first geometrical figure 1200and the at least one second geometrical figure 122 may simplify the arrangement of the plurality of components 102 on the support platform 104. Similar shapes of the first geometrical figure 120 and the at least one second geometrical figure 122 may be chosen based on application requirements.

In some embodiments, the first geometrical figure 120 and/or the at least one second geometrical figure 122 are two-dimensional figures such as a circle (as shown in **FIGS. 2** **and** **3****),** a triangle, an ellipse, a rectangle, a square, or a polygon. In some other embodiments, the first geometrical figure 120 and/or the at least one second geometrical figure 122 are three-dimensional figures such as an ellipsoid, a sphere, a cube, a cuboid, a prism, a cylinder. Three-dimensional geometrical figures may ensure proper utilization of available space to accommodate the plurality of components 102 on the support platform 104.

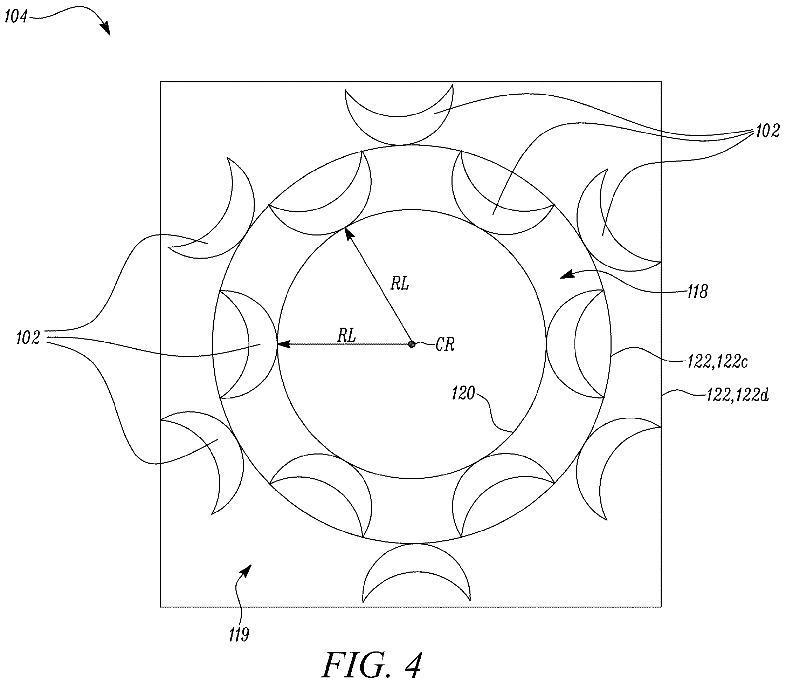

**FIG. 4** is a schematic view of an exemplary arrangement of the plurality of components 102 on the support platform 104 of the scanning apparatus 100, according to another embodiment of the present disclosure. In the illustrated embodiment of **FIG. 4****,** the first geometrical figure 120 and the at least one second geometrical figure 122 have different shapes. Moreover, the plurality of second geometrical figures 122 has different shapes. In the illustrated embodiment of **FIG. 4****,** the plurality of second geometrical figures 122 includes a circular geometrical figure 122c and a rectangular geometrical figure 122d that are concentric with each other. Moreover, the first geometrical figure 120 is also a circle. In other embodiments, the first geometrical figure 120 can be a triangle, a rectangle, or a polygon, and the at least one second geometrical figure 122 can have a shape other than that of the first geometrical figure 120.

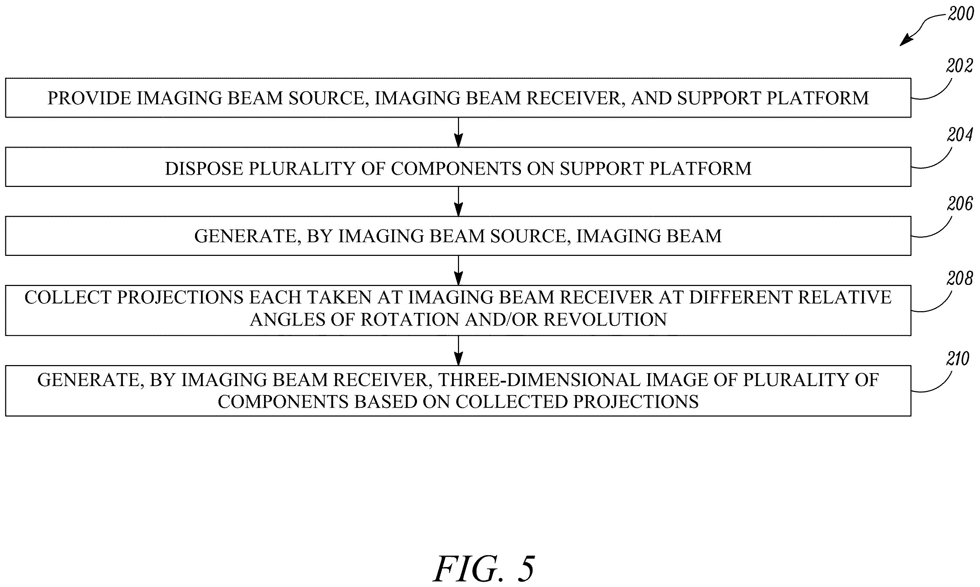

**FIG. 5** is a flowchart for a method 200 for scanning the plurality of components 102 shown in **FIGS. 2 to 4****,** according to an embodiment of the present disclosure. The method 200 may be at least partly performed by the scanning apparatus 100 of **FIG. 2****.** Referring to **FIGS. 2** **and** **5****,** at step 202, the method 200 includes providing the imaging beam source 108, the imaging beam receiver 114, and the support platform 104. The imaging beam source 108 and the imaging beam receiver 114 are oppositely disposed to either side of the support platform 104. The support platform 104 is configured to rotate and/or revolve relative to the imaging beam source 108 and the imaging beam receiver 114 about one or more axes.

At step 204, the method 200 further includes disposing the plurality of components 102 on the support platform 104. The plurality of components 102 is positioned in the gap 118 between the first geometrical figure 120 and the at least one second geometrical figure 122 in a configuration that reduces the variation in material thickness penetrated at different relative angles of rotation and/or revolution. The first geometrical figure 120 and the at least one second geometrical figure 122 are concentric.

In some embodiments, the plurality of components 102 is positioned in the gap 118 such that smallest dimension SD of the one or more regions of interest 103 of each of the plurality of components 102 is aligned with the corresponding radial line RL joining the corresponding component 102 in the plurality of components 102 and centre of rotation and/or revolution CR. In some embodiments, the plurality of components 102 is positioned in the gap 118 such that combined thickness of material of two or more adjacent components 102 to be penetrated by the imaging beam 110 is evened out in a direction between the imaging beam source 108 and the imaging beam receiver 114. In some embodiments, the plurality of components 102 is positioned in the gap 118 such that combined thickness of material of two or more oppositely positioned components 102 to be penetrated by the imaging beam 110 is evened out in a direction between the imaging beam source 108 and the imaging beam receiver 114.

At step 206, the method 200 further includes generating, by the imaging beam source 108, the imaging beam 110 that passes through the plurality of components 102 while the support platform 104 rotates and/or revolves relative to the imaging beam source 108 and the imaging beam receiver 114 about the one or more axes. At step 208, the method 200 further includes collecting projections each taken at the imaging beam receiver 114 at different relative angles of rotation and/or revolution. At step 210, the method 200 further includes generating, by the imaging beam receiver 114, the three-dimensional image 116 of the plurality of components 102 based on the collected projections. Alternatively, in some embodiments, the method 200 includes generating the three-dimensional image 116 of the plurality of components 102 through a software or a computer that may be separate from the scanning apparatus 100.

Various examples have been described, each of which comprise one or more combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. A method (200) for scanning a plurality of components (102), the method (200) comprising:
providing an imaging beam source (108), an imaging beam receiver (114), and a support platform (104), wherein the imaging beam source (108) and the imaging beam receiver (114) are oppositely disposed to either side of the support platform (104), wherein the support platform (104) is configured to rotate and/or revolve relative to the imaging beam source (108) and the imaging beam receiver (114) about one or more axes;
disposing the plurality of components (102) on the support platform (104), wherein the plurality of components (102) is positioned in a gap (118) between a first geometrical figure (120) and at least one second geometrical figure (122) in a configuration that reduces the variation in material thickness penetrated at different relative angles of rotation and/or revolution, wherein the first geometrical figure (120) and the at least one second geometrical figure (122) are concentric;
generating, by the imaging beam source (108), an imaging beam (110) that passes through the plurality of components (102) while the support platform (104) rotates and/or revolves relative to the imaging beam source (108) and the imaging beam receiver (114) about the one or more axes;
collecting projections each taken at the imaging beam receiver (114) at different relative angles of rotation and/or revolution; and
generating, by the imaging beam receiver (114), a three-dimensional image (116) of the plurality of components (102) based on the collected projections.

2. The method (200) of claim 1, wherein the plurality of components (102) is positioned in the gap (118) such that smallest dimension (SD) of one or more regions of interest (103) of each of the plurality of components (102) is aligned with a corresponding radial line (RL) joining the corresponding component (102) in the plurality of components (102) and centre of rotation and/or revolution (CR).

3. The method (200) of claim 1 or 2, wherein the plurality of components (102) is positioned in the gap (118) such that combined thickness of material of two or more adjacent components (102) to be penetrated by the imaging beam (110) is evened out in a direction between the imaging beam source (108) and the imaging beam receiver (114).

4. The method (200) of claim 1 or 2, wherein the plurality of components (102) is positioned in the gap (118) such that combined thickness of material of two or more oppositely positioned components (102) to be penetrated by the imaging beam (110) is evened out in a direction between the imaging beam source (108) and the imaging beam receiver (114).

5. The method (200) of any preceding claim, wherein the at least one second geometrical figure (122) comprises a plurality of second geometrical figures (122) that are concentric with one another.

6. The method (200) of claim 5, wherein any two adjacent second geometrical figures (122) in the plurality of second geometrical figures (122) defines a corresponding gap (119) therebetween.

7. The method (200) of claim 6, wherein at least one component (102) in the plurality of components (102) is positioned in the gap (119) between the corresponding two adjacent second geometrical figures (122).

8. The method (200) of any one of claims 5 to 7, wherein the plurality of second geometrical figures (122) has different shapes.

9. The method (200) of any one of claims 1 to 7, wherein the first geometrical figure (120) and the at least one second geometrical figure (122) have different shapes.

10. The method (200) of any preceding claim, wherein the first geometrical figure (120) and/or the at least one second geometrical figure (122) are two-dimensional figures such as a circle, a triangle, an ellipse, a rectangle, a square, or a polygon.

11. The method (200) of any preceding claim, wherein the first geometrical figure (120) and/or the at least one second geometrical figure (122) are three-dimensional figures such as an ellipsoid, a sphere, a cube, a cuboid, a prism, a cylinder.

12. The method (200) of any preceding claim, wherein the plurality of components (102) is positioned offset from the one or more axes of rotation and/or revolution.

13. The method (200) of any preceding claim, wherein the plurality of components (102) is positioned between the first geometrical figure (120) and the at least one second geometrical figure (122), such that a notional line drawn from the imaging beam source (108) to the imaging beam receiver (114) passing through the one or more axes of rotation and/or revolution intersects two or more of the plurality of components (102).

14. The method (200) of any preceding claim, wherein the plurality of components (102) is positioned between the first geometrical figure (120) and the at least one second geometrical figure (122), such that the first geometrical figure (120) and the at least one second geometrical figure (122) together provide rotational symmetry of an overall configuration about the one or more axes of rotation and/or revolution.

15. A scanning apparatus (100) for scanning a plurality of components (102), the scanning apparatus (100) comprising:
an imaging beam source (108) configured to generate an imaging beam (110) that passes through the plurality of components (102);
an imaging beam receiver (114) configured to receive the imaging beam (110), such that the plurality of components (102) is disposed between the imaging beam source (108) and the imaging beam receiver (114), wherein the imaging beam receiver (114) is configured to generate a three-dimensional image (116) in response to receiving the imaging beam (110); and
a support platform (104) configured to support the plurality of components (102), wherein the support platform (104) is configured to rotate and/or revolve relative to the imaging beam source (108) and the imaging beam receiver (114) about one or more axes to allow generation of the three-dimensional image (116), wherein the plurality of components (102) is positioned in a gap (118) between a first geometrical figure (120) and at least one second geometrical figure (122) in a configuration that reduces the variation in material thickness penetrated at different relative angles of rotation and/or revolution, and wherein the first geometrical figure (120) and the at least one second geometrical figure (122) are concentric.
